Europäisches Patentamt

European Patent Office

Office européen des brevets

(11) Veröffentlichungsnummer: **0 324 985**

**A2**

(12) # EUROPÄISCHE PATENTANMELDUNG

(21) Anmeldenummer: 88121835.8

(22) Anmeldetag: 29.12.88

(51) Int. Cl.⁴: **C08F 251/00** , //(C08F251/00, 220:06)

(30) Priorität: 21.01.88 DE 3801633

(43) Veröffentlichungstag der Anmeldung:
26.07.89 Patentblatt 89/30

(84) Benannte Vertragsstaaten:
AT BE CH DE ES FR GB IT LI NL SE

(71) Anmelder: STARCHEM GMBH
Postfach 1320
D-4370 Marl 1(DE)

(72) Erfinder: Heidel, Klaus, Dr.
Veilchenstrasse 10
D-4370 Marl(DE)

(54) Verfahren zur Herstellung von wasserabsorbierenden und wasserquellbaren Polysaccharid-Pfropfpolymeren.

(57) Pfropfpolymere aus einem Polysaccharid als Pfropfgrundlage und wasserlöslichen, ethylenisch ungesättigten, Carboxylgruppen enthaltenden Monomeren können durch diskontinuierliche, radikalische, inverse Suspensionspolymerisation hergestellt werden.

Wenn man nach der Polymerisation eine Teilentwässerung durchführt und dann mit Quervernetzungsmitteln vernetzt, werden Pfropfpolymere erhalten, die bei sehr gutem Absorptionsvermögen hinsichtlich ihrer Absorptionsgeschwindigkeit für Wasser und Körperflüssigkeiten und ihrer Feinteiligkeit weiter verbessert sind.

Herstellung von Polysaccharid-Pfropfpolymeren.

EP 0 324 985 A2

## Verfahren zur Herstellung von wasserabsorbierenden und wasserquellbaren Polysaccharid-Pfropfpolymeren

Die Erfindung betrifft ein verbessertes Verfahren zur Herstellung von stark wasserabsorbierenden und wasserquellbaren Pfropfpolymeren aus 1 bis 30 Gew.-% Polysaccharid, 99 bis 70 Gew.-% (Meth)-Acrylsäure, die zu 50 bis 100 % neutralisiert ist, in wäßriger Lösung und 0 bis 25 Gew.-% weiteren, Carboxylgruppen enthaltenden Vinylmonomeren durch inverse Suspensionspolymerisation in Gegenwart von hydrophilen und lipophilen Tensiden.

Wasserabsorbierende Polymere finden vielfältige Verwendung auf dem Sanitär- und Hygienesektor als Wasserabsorptionsmittel in Papierwindeln und -tüchern, als Tampons, Krankenunterlagen, Elektrolytverdikkern in Trockenbatterien, als Feuchthaltemittel oder Wasserspeicher in der Landwirtschaft und als Trocknungsmittel. Bei diesen Anwendungen ist sowohl die Absorptionskapazität als auch die Absorptionsgeschwindigkeit von Bedeutung.

Geeignete Polymere sind derivatisierte, meist mit wasserlöslichen Vinylmonomeren gepfropfte Polysaccharide wie Carboxymethylcellulose, hydrolysierte Stärke-Acrylnitril-Pfropfpolymere, Acrylsäure-Stärke-Pfropfpolymere oder vollsynthetische, schwach vernetzte Polymere wie teilvernetzte Polyacrylsäuresalze oder teilvernetzte Polymaleinsäurederivate.

Verfahren zur Herstellung von Polysaccharid-Pfropfpolymeren durch Pfropfen von (Meth)Acrylsäure auf Stärke in wäßriger Lösung sind nach den japanischen Patentschriften 40-43 408 und 80-139 408 bekannt.

Bei der vernetzenden Polymerisation von wasserlöslichen Monomeren in wäßriger Lösung zur Herstellung von teilchenförmigen Gelen ergeben sich folgende Schwierigkeiten:

1) Man erhält als Reaktionsprodukte wassergequollene Gele, die schwierig zu handhaben sind. Der Feststoff muß durch Fällung von der Was serphase abgetrennt werden, wobei er in verklumpter Form anfällt. Er muß dann getrocknet und gemahlen werden.

2) Eine Durchmischung und Rührung von wäßrigen Lösungen ist wegen der Quellung der Pfropfpolymere und einer hohen Viskosität auch bei niedrigen Feststoffgehalten von 10 bis 20 % nicht möglich. Deshalb ist eine kontrollierte Reaktion in üblichen Rührapparaturen nicht durchführbar.

3) Ein effektives Aufpfropfen von wasserlöslichen Monomeren auf Stärke unter Bildung von gelhaltigen Pfropfpolymeren mit einer für gute Wasserabsorptionsfähigkeit erforderlichen verzweigtkettigen Struktur ist in rein wäßrigen Reaktionsmedien nicht möglich. Denn wasserlösliche Monomere wie Acrylsäure oder Acrylamid polymerisieren hier in einer unvermeidbaren Nebenreaktion zu wasserlöslichen, nicht gepfropften Homopolymeren, die lediglich eindickend wirken, nicht aber wasserquellbar sind und deshalb die Wasserabsorptionsfähigkeit vermindern.

Man hat deshalb versucht, Polysaccharid-Pfropfpolymere durch Suspensionspolymerisation herzustellen.

In DE-OS 28 40 010 wird eine inverse Suspensionspolymerisation (Wasser-in-Öl-Suspensionspolymerisation) zur Pfropfung von Polysacchariden mit wasserlöslichen Monomeren beschrieben.

Das Verfahren hat folgende Merkmale:

1) Die Monomere werden in Form einer wäßrigen Lösung, die in einem gesonderten Reaktionsgefäß bereitet wird, zusammen mit einer relativ hohen Zusatzmenge eines vorzugsweise ionischen wasserlöslichen Tensids zur organischen Phase zugegeben. Dabei wird das Tensid für eine homogene Verteilung der wäßrigen Phase in der organischen Phase als notwendig angesehen. Diese sogenannte halbkontinuierliche Verfahrensmethode erfordert somit ein zusätzliches Reaktionsgefäß, das beim Einsatz von Acrylsäure als Monomer mit einer Kühleinrichtung zur Abführung der Neutralisationswärme ausgerüstet sein muß.

2) Es werden vorzugsweise Gemische von ionischen und nichtionischen Tensiden in hohen Zusatzmengen von 0.5 bis 12 %, bezogen auf das Lösungsmittel, eingesetzt.

3) Ausweislich der Beispiele werden vorzugsweise die wasserlöslichen Monomere Acrylsäure und Acrylamid in solchen Mengenverhältnissen eingesetzt, daß wasserlösliche Polymere und keine wasserquellbaren, gelartigen Pfropfpolymere erhalten werden.

4) Es werden keine Quervernetzungsmittel verwendet.

In der japanischen Patentschrift 80-161 813 wird die Herstellung eines wasserabsorbierenden Pfropfpolymers durch Pfropfung eines Polysaccharids mit Acrylsäure in einem Benzin-Kohlenwasserstoff als

2

Lösemittel in Gegenwart eines organophilen nichtionischen Tensids und eines wasserlöslichen Initiators beschrieben. Das bei der Polymerisation entstehende Produkt neigt jedoch zu Verklumpungen.

In EP 0 036 463 A2 wird bei der inversen Suspensionspolymerisation von Acrylaten ohne Polysaccharid ein öllöslicher oberflächenaktiver Stoff mit relativ hohem Hydrophil-Lipophil-Gleichgewicht (HLB-Wert) von 8 bis 12 eingesetzt, wobei Sorbitanmonolaurat bevorzugt wird. Bei der Polymerisation tritt starke Gel- und Klumpenbildung auf. Die Produkte zeichnen sich durch ein hohes Wasseraufnahmevermögen aus. Der apparative Aufwand ist relativ hoch.

In DE-OSS 33 31 644 und 35 07 775 werden Wasser-in-Öl-Suspensionspolymerisationen zur Herstellung von Polyacrylatpulvern durchgeführt, wobei öllösliche Schutzkolloide oder Tenside mit niedrigem HLB-Wert zugesetzt werden müssen. Nach Teilentwässerung und Vernetzung entstehen Polymere, die kein Polysaccharid enthalten. Die Wasserabsorptionskapazität ist befriedigend. Die Polymerisation wird nach der kontinuierlichen Verfahrensweise mit realtiv hohem apparativen Aufwand durchgeführt, wobei die wäßrige Monomerlösung durch Neutralisation von Acryl säure mit einer wäßrigen Alkali- oder Ammoniumhydroxid-Lösung unter Kühlung in einem gesonderten Reaktionsgefäß hergestellt und zur organischen Lösung dosiert wird.

In DE-OS 36 13 309 werden unvernetzte Polysaccharid-Pfropfpolymere durch inverse Suspensionspolymersation hergestellt. Dabei werden polare und unpolare nichtionische Tenside zugesetzt. Man erhält pulverförmige Pfropfpolymere mit hoher Wasserabsorptionskapazität. Bei hohen Anforderungen an die Saugkraft, so z. B. bei Windeln und Tüchern, werden jedoch nicht alle Wünsche erfüllt.

Aufgabe der vorliegenden Erfindung ist es, Pfropfpolymere aus einem Polysaccharid und mindestens einem wasserlöslichen Carboxyl- oder Carboxylatgruppen enthaltenden Vinylmonomeren durch inverse Suspensionspolymerisation in Gegenwart von nichtionischen hydrophilen und lipophilen Tensiden herzustellen. Dabei sollten die Produkte als Pulver anfallen und sich bei geringer Wasserlöslichkeit durch ein hohes Absorptionsvermögen und eine hohe Saugkraft für Wasser und Körperflüssigkeiten auszeichnen. Der apparative Aufwand sollte dabei gering sein.

Die Aufgabe wird erfindungsgemäß dadurch gelöst, daß man nach der eigentlichen Polymerisation

(a) eine Teilentwässerung durch azeotrope Destillation bis zu einem Wassergehalt von 10 bis 30 Gew.-%, bezogen auf die wäßrige Polymerphase, vornimmt,

(b) nach Zusatz von 0,005 bis 5 Gew.-% Quervernetzungsmittel, bezogen auf die Pfropfpolymerkomponenten, eine Vernetzung durchführt und

(c) das Polymer als Pulver abtrennt.


Die inverse Suspensionspolymerisation wird bei einem Phasenverhältnis organische Phase : wäßrige Phase von 4 : 1 bis 1,5 : 1 Gewichtsteilen durchgeführt.

Als Lösemittel für die organische Phase werden Kohlenwasserstoffe mit 6 bis 12 C-Atomen eingesetzt. Man kann aliphatische oder alicyclische Kohlenwasserstoffe wie Cyclohexan, n-Hexan, $C_8$-Isoparaffine oder technische Benzinfraktionen wie Normalbenzin, Ligroin, Testbenzin oder Solventnaphtha mit einem Aromatenanteil bis zu 20 % und einen Siedepunkt im Bereich von 50 bis 200 °C verwenden.

Die Ausgangskomponenten für die Pfropfpolymerisation bestehen zu 1 bis 30 Gew.-% aus Polysaccharid. Vorzugsweise liegt der Anteil bei 3 bis 10 Gew.-%. Geeignete Polysaccharide sind native Stärken aus Kartoffeln, Mais, Weizen, Reis oder Tapiocawurzeln, ferner Wachsmais oder High-Amylose-Stärke sowie deren Derivate, insbesondere Stärkeether und -ester. Geeignet sind auch Cellulose oder Cellulosederivate.

Als weitere Ausgangskomponenten werden 70 bis 99 Gew.-% Acrylsäure oder Metharcylsäure, zu 50 bis 100 % neutralisiert, als wäßrige Lösung eingesetzt. Daneben können bis zu 25 Gew.-% weitere Comonomere wie Acrylamid, Methacrylamid, Na-Salz von 2-Acrylamido-2-methylpropansulfonsäure, 2-Methacryloylethansulfonsäure, 2-Hydroxyethylacrylat, 2-Hydroxyethylmethacrylat, N,N-Dimethylaminoethylacrylat oder -methacrylat oder dessen quaternäre Ammoniumsalze über die wäßrige Lösung für die Polymerisation verwendet werden.


Als Suspensionshilfsmittel werden benötigt:

1. Mindestens ein nichtionisches, in dem aliphatischen Kohlenwasserstoff mindestens teilweise lösliches Tensid mit einem HLB-Wert kleiner als 10, vorzugsweise von 5 bis 10. Derartige Tenside sind vorzugsweise lipophile Sorbitanester wie zum Beispiel Sorbitanmonolaurat oder Sorbitanmonopalmitat. Außerdem sind Polyethylenglykol(200)-monooleat, Polyethylenglykol(200)-monolaurat oder Polyethylenglykol(300)-oleat gut geeignet. Diese lipophilen Tenside werden in Konzentrationen von 1 bis 10 Gew.-%, bezogen auf das wasserlösliche Monomer, eingesetzt. Vorzugsweise liegt die Tensidkonzentration bei 2 bis 5 Gew.-%.

2. Mindestens ein nichtionisches, wasserlösliches Tensid mit einem HLB-Wert größer als 10, vorzugsweise von 12 bis 20. Derartige Tenside sind beispielsweise Polyethylenglykolether aus einem aliphatischen einwertigen Alkohol mit 6 bis 20 C-Atomen und einem Polyethylenglykol mit 3 bis 30, insbesondere 4 bis 20 Ethylenoxideinheiten. Geeignet sind handelsübliche $C_{12}$-Fettalkoholpolyglykolether mit 7 bis 19 Ethylenoxideinheiten und einem HLB-Wert von 13 bis 18. Geeignet sind ferner Polyoxyethylen-Sorbitanfettsäureester mit einem HLB-Wert von 10 bis 20 wie Polyoxyethylen-Sorbitan-monolaurat, oder Polyoxyethylen-Sorbitan-monooleat. Diese Zusatzstoffe werden in Konzentrationen von 1 bis 10 Gew.-%, bezogen auf das wasserlösliche Monomer, eingesetzt. Vorzugsweise beträgt die Konzentration 2 bis 5 Gew.-%.

Im Gegensatz zum halbkontinuierlichen Verfahren werden bei diesem einstufigen, diskontinuierlichen, inversen Suspensionspolymerisationsverfahren die freie Carboxylgruppen enthaltenden Monomere im Polymerisationskessel in-situ in Gegenwart der organischen Phase in der wäßrigen Phase durch eine wäßrige Lauge neutralisiert. Man kann die Monomere vorlegen und Lauge zudosieren oder Lauge vorlegen und die Monomere zugeben.

Acrylsäure und Methacrylsäure werden dabei zu 50 bis 100 % neutralisiert. Dazu werden zweckmäßigerweise Alkali- oder Ammoniumhydroxidlösungen mit einer Konzentration von 15 bis 30 Gew.-% verwendet. Nach der Bereitung der wäßrigen Phase und Homogenisierung durch Rühren erfolgt die Zugabe des Polysaccharids in körniger Form.

Die Pfropfpolymerisation wird durch Zugabe eines wasserlöslichen, freie Radikale liefernden Initiators wie Kaliumpersulfat, Natriumpersulfat und/oder Ammoniumpersulfat und durch Erhitzen auf 40 bis 100 °C ausgelöst. Die Konzentration des Initiators beträgt, bezogen auf das wasserslösliche Monomer, 0,05 bis 2 Gew.-%.

Die Reaktionszeit beträgt 0,5 bis 6 Stunden.

Während der Polymerisation können 0,005 bis 1 Gew.-% eines vollständig oder überwiegend wasserlöslichen Quervernetzungsmittels zugesetzt wer den. Geeignet sind Vinylverbindungen wie N'N-Methylen-bis-acrylamid, Butandiol-1.4-di(meth)acrylat, Neopentylglykoldimethacrylat, Ethandioldi(meth)acrylat, Dialkylmaleinat, Glycidyl(meth)acrylat, Allylmethacrylat, Polyethylenglykol(450)dimethacrylat oder Ethylenglykoldiglycidylether.

Während der inversen Suspensionspolymerisation liegt der Wassergehalt, bezogen auf die wäßrige Monomerlösung, bei 40 bis 60 Gew.-%.

Die Pfropfpolymerisation wird in üblichen, für diskontinuierliche Reaktionsführung geeigneten Reaktionsbehältern durchgeführt, die mit einem Rührer ausgerüstet sind und wahlweise geheizt und gekühlt werden können.

Erfindungsgemäß wird nach der Polymerisation eine Teilentwässerung bis zu einem Wassergehalt von 10 bis 30 Gew.-%, bezogen auf die wäßrige Polymerphase, durch azeotrope Destillation durchgeführt. Man stellt vorzugsweise einen Wassergehalt von 20 bis 30 Gew.-% ein. Die Destillation wird bei 50 bis 120 °C durchgeführt, wobei leichter Überdruck oder auch Vakuum angelegt werden kann. Dabei können übliche Entwässerungsapparaturen verwendet werden, bei denen die organische Phase zurückgeführt wird.

Nach der Teilentwässerung werden 0,005 bis 5 Gew.-% Quervernetzungsmittel, bezogen auf die Ausgangskomponenten der Pfropfpolymerisation, zugesetzt. Vorzugsweise liegt der Gehalt bei 0,05 bis 0.5 Gew.-%, wobei man ganz besonders Epoxide bevorzugt. Gut geeignet sind beispielsweise Polyglycidylether wie Ethylenglykoldiglycidylether, Polyethylenglykoldiglycidylether, Glycerintriglycidylether und Diglycerintetraglycidylethern. Außerdem sind auch Polyaldehyde wie Glyoxal oder Haloepoxyverbindungen wie Epichlorhydrid verwendbar. Diese Quervernetzungsmittel werden zweckmäßigerweise in wäßriger oder organischer Lösung zugegeben. Die Nachvernetzung erfolgt durch Erhitzen auf 50 bis 100 °C, wobei vorzugsweise auf 60 bis 80 °C erwärmt wird. Die Vernetzungsreaktion wird nach 0,5 bis 4 Stunden beendet.

Nach der Vernetzung fallen die Produkte als feinteilige Körner oder Perlen an. Sie können leicht von der kontinuierlichen Phase, beispielsweise durch Filtrieren oder Zentrifugieren, getrennt werden. Anschließend können sie nach üblichen Verfahren, beispielsweise unter Vakuum oder unter Anwendung eines Wirbelschichttrockners, zu pulverförmigem Produkt getrocknet werden. Das Filtrat kann in der nächsten Polymerisationscharge wiederverwendet werden. Lösemittel und Wasser lassen sich auch destillativ vom Polymerpulver abtrennen.

Als feinteilige Produkte werden im Sinne dieser Erfindung Produkte mit Korngrößen unter 2 mm

4

verstanden, wobei über 66 Gew.-% der Produkte Korngrößen unter 500 µm aufweisen sollen.
Die Bildung von grobteiligen Agglomeraten und Anbackungen ist sehr gering.

Das erfindungsgemäße Verfahren hat folgende Vorteile:

1. Das einstufig und diskontinuierlich durchgeführte inverse Suspensionspolymerisationsverfahren erfordert erheblich geringeren apparativen Aufwand als die bekannten halbkontinuierlichen Verfahren, da die gesonderte Bereitung und Dosierung der wäßrigen Monomerlösung entfällt. Neutralisation der (Meth)-Acrylat-Lösung, Pfropfpolymerisation, Teilentwässerung und Vernetzung werden in einem Polymerisationsgefäß durchgeführt.

2. Die Pfropfpolymerisation zu feinteiligem Produkt ist weiter verbessert.

3. Das Endprodukt zeichnet sich durch eine erhöhte Porosität aus. Es besitzt ein hohes Absorptionsvermögen und eine sehr hohe Saugkraft für Wasser und Körperflüssigkeiten. Es eignet sich daher in besonderem Maße zur Einarbeitung in zellstoffhaltige, saugfähige Hygieneartikel wie Wegwerfwindeln, Damenbinden, Wischtüchern und Krankenunterlagen und auch als Trockenmittel, als Quellmittel in Dichtungsmassen, als Eindickmittel sowie als Wasserspeicher oder Feuchthaltemittel in der Landwirtschaft.

Für die Beispiele, die die Erfindung verdeutlichen sollen, wurden folgende Bestimmungen durchgeführt:

Wassergehalt:

Der Wassergehalt der Monomerlösung wird aus den Mengen der Einsatzstoffe und der Wassergehalt nach der Teilentwässerung aus der abdestillierten Wassermenge berechnet.

Absorptionsvermögen:

In einem 100 ml Zentrifugenglas werden 0,050 g Polymer mit 70 ml destilliertem Wasser oder 0,500 g Polymer mit 70 ml synthetischem Urin (Mischung aus 3883 g destilliertem Wasser, 33,2 g NaCl, 4,0 g $MgSO_4 \bullet 7H_2O$, 2,4 g $CaCl_2$ und 77,6 g Harnstoff) versetzt und eine Stunde unter schwachem Rühren gequollen. Danach wird die Gelphase 0,5 Stunden bei 4500 U/M von der Solphase abzentrifugiert und gewogen.

$$\text{Absorptionsvermögen} = \frac{\text{Gelauswaage - Einwaage}}{\text{Einwaage}} \qquad (g/g)$$

Saugkraft:

0,050 g Polymer (bei Verwendung von destilliertem Wasser) oder 0,100 g Polymer (bei Verwendung von synthetischen Urin) werden auf eine Glasfritte (Typ G3, Durchmesser 3 cm) gestreut, die mit einer flüssigkeitsgefüllten Bürette verbunden und auf das Niveau der Glasfritte nivelliert ist. Die Absorbierte Flüssigkeitsmenge wird nach 0,5 bis 5 Minuten an der Bürette gemessen.

$$\text{Saugkraft} = \frac{\text{absorbierte Flüssigkeitsmenge}}{\text{Einwaage}} \qquad (g/g)$$

Die erfindungsgemäßen Beispiele werden durch Zahlen und die Vergleichsbeispiele durch Buchstaben gekennzeichnet.

5

Beispiel 1

In einem 2 l-Rundhalskolben mit Blattrührer, Stickstoffeinleitung und Wasserabscheider werden 450 ml einer Benzinfraktion mit einem Siedebe reich von 80 bis 110 °C (4,6 % Hexan, 76,7 % Heptan und 18,7 % Octan) vorgelegt. Dann werden bei laufendem Rührer 78 g Acrylsäure und unter Kühlung 120 g 25 %ige Natronlauge im Verlauf einer halben Stunde zugefügt, wobei die Kolbeninnentemperatur 25 °C nicht übersteigt. Dann werden 4 g Sorbitanmonolaurat (SPAN[R] 20 von Atlas, Wilmington, Del., USA), 1 g Polyethylenglykol mit einer Molmasse von 1550 (POLYDIOL 1550 von Hüls AG), 1 g native Maisstärke sowie 0,1 g Ammoniumpersulfat zugesetzt. Duch Temperaturerhöhung auf 60 °C wird die Polymerisation gestartet. Der Kolbenmantel wird gekühlt, so daß die Innentemperatur 70 °C nicht übersteigt. Die Polymerisation wird eine Stunde fortgeführt. Anschließend wird bis zum Sieden erhitzt. Durch azeotrope Destillation am Wasserabscheider werden 75 g Wasser destillativ entfernt. Bei 65 °C werden 0,050 g Ethylenglykoldiglycidylether, gelöst in 5 g Wasser, zugegeben und 2 Stunden bei 70 °C nachgerührt. Das entstandene körnige Polymer wird abfiltriert und 5 Stunden bei 50 °C im Vakuum getrocknet. Die Versuchsergebnisse gehen aus Tabelle 1 hervor.


Beispiele 2 bis 7, Vergleichsbeispiele A und B

Es wird wie in Beispiel 1 verfahren. Es werden jedoch die in Tabelle 1 angegebenen Mengen an nativer Maisstärke eingesetzt.

Nach Tabelle 1 zeigen die erfindungsgemäßen Beispiele 1 bis 7 gegenüber den Vergleichsbeispielen A und B, deren Produkte kein bzw. zu viel Polysaccharid enthalten, eine deutlich verbesserte Saugkraft gegenüber Wasser und synthetischem Urin und ein feineres Korn. Gegenüber Vergleichsbeispiel A ist die Porosität erhöht. Mit einem Teilchenbild-Analysengerät werden volumenbezogenen spezifischen Oberflächen $O_v$ (m³/cm³) bestimmt, die mit zunehmendem Stärkeanteil ansteigen:

| Vergleichsbeispiel A: | $O_v$ (m³/cm³) = 0,025 |
|---|---|
| Beispiel 2: | $O_v$ (m³/cm³) = 0,033 |
| Beispiel 4: | $O_v$ (m³/cm³) = 0,042 |
| Beispiel 5: | $O_v$ (m³/cm³) = 0,053 |


Vergleichsbeispiele C und D

Es wird wie in den Beispielen 4 und 5 verfahren, es werden jedoch weder Teilentwässerung noch Vernetzung durch Ethylenglykoldiglycidylether vorgenommen.

Die Produkte müssen mit Aceton gewaschen und vorsichtigt getrocknet werden, um Verklumpung zu vermeiden. Nach der Trocknung erhält man ein feines Pulver mit sehr gutem Absorptionsvermögen und sehr schlechter Saugkraft (vgl. Tabelle 1).


Beispiele 8 bis 10:

Es wird wie in Beispiel 1 verfahren. Man setzt jedoch 138 g 25 %ige Natronlauge zu, wodurch die Acrylsäure zu 80 % neutralisiert wird. Anschließend werden 3 g Sorbitanmonolaurat, 1 g Sorbitanmonolauratoxethylat (TWEEN[R] 20 von Atlas, Wilmington, Del., USA), 0,05 g Glycidylacrylat sowie native Maisstärke (vgl. Tabelle 1) zugesetzt. Nach Zugabe von 0,1 g Ammoniumpersulfat und 0,1 g Azo-bis(2- amidinopropan)-hydrochlorid wird bei 60 °C polymerisiert.

Anschließend werden 75 g Wasser durch azeotrope Destillation abgetrennt. Danach wird wieder wie in Beispiel 1 vernetzt und zu Pulver verarbeitet.

Die Versuchsergebnisse gehen aus Tabelle 1 hervor.


Beispiele 11 und 12:

In einem 6 l-Glasreaktor mit Blattrührer, Stickstoffeinleitungsrohr und Rückflußkühler werden 1 800 ml einer Benzinfraktion mit einem Siedeberich von 80 - 110 °C vorgelegt. 312 g Acrylsäure werden gelöst und dann 480 g 25 %ige Natronlauge zugegeben. Es werden 16 g Sorbitanmonolaurat, 4 g Polyethylenglykol mit einer Molmasse von 1550, 0,1 g Ethylendiamintetraacetat und Weizenstärke (vgl. Tabelle 1) zugesetzt. Anschließend wird auf 60 °C erhitzt, worauf dann eine Lösung von 0,4 g Natriumpersulfat in 10 g Wasser in einer Stunde zugefügt wird. Nach Beendigung der Polymerisation werden 280 g Wasser abdestilliert. Nach Zusatz von 0,6 g Ethylenglykoldiglycidylether wird 2 Stunden bei 70 °C nachgerührt. Das körnige Produkt wird abgesaugt und 5 Stunden bei 50 °C im Vakuum getrocknet.

Vergleichsbeispiel E

Es wird wie in den Beispielen 11 und 12 verfahren.
Es wird jedoch keine Weizenstärke zugesetzt.
Die Versuchsergebnisse sind in Tabelle 1 zusammengestellt.

Tabelle 1

| Beispiel Nr. | Einsatzstoffe (g) | | native Maisstärke | Absorptionsvermögen (g/g) | | Saugkraft (g/g) | | | | Siebanalyse (%) | | |
|---|---|---|---|---|---|---|---|---|---|---|---|---|
| | Acryl säure | Natron lauge | | Wasser | synth. Urin | Wasser nach Min | | synth. Urin nach Min | | > 800 μ | 500 - 800 μ | 100 - 500 μ |
| | | | | | | 0,5 | 5 | 0,5 | 5 | | | |
| A | 78 | 120 | - | 590 | 38 | 32 | 60 | 8 | 22 | 49 | 25 | 26 |
| 1 | 78 | 120 | 1 | 610 | 36 | 42 | 65 | 12 | 22 | 5 | 3 | 92 |
| 2 | 78 | 120 | 2 | 615 | 35 | 52 | 90 | 12 | 21 | 5 | 3 | 92 |
| 3 | 78 | 120 | 4 | 620 | 35 | 55 | 92 | 13 | 25 | 7 | 2 | 91 |
| 4 | 78 | 120 | 6 | 620 | 40 | 60 | 100 | 12 | 28 | 4 | 5 | 91 |
| 5 | 78 | 120 | 11 | 560 | 38 | 75 | 110 | 18 | 30 | 5 | 4 | 91 |
| 6 | 78 | 120 | 17 | 510 | 37 | 80 | 120 | 17 | 30 | 8 | 5 | 87 |
| 7 | 78 | 120 | 25 | 450 | 36 | 66 | 110 | 17 | 30 | 6 | 7 | 87 |
| B | 78 | 120 | 40 | 250 | 22 | 40 | 80 | 7 | 17 | 85 | 12 | 3 |
| C | 78 | 120 | 6 | 630 | 46 | - | 32 | - | 7 | 7 | 5 | 88 |
| D | 78 | 120 | 11 | 560 | 41 | 14 | 48 | 5 | 14 | 7 | 5 | 88 |
| 8 | 78 | 138 | 6 | 525 | 50 | 54 | 100 | 10 | 25 | 8 | 4 | 88 |
| 9 | 78 | 138 | 12 | 545 | 50 | 65 | 115 | 15 | 27 | 5 | 4 | 91 |
| 10 | 78 | 138 | 25 | 545 | 50 | 68 | 120 | 15 | 30 | 7 | 3 | 90 |
| 11 | 312 | 480 | 24* | 620 | 40 | 76 | 130 | 15 | 26 | 3 | 7 | 90 |
| 12 | 312 | 480 | 44* | 540 | 50 | 90 | 170 | 16 | 28 | 6 | 9 | 85 |
| E | 312 | 480 | - | 504 | 35 | 28 | 86 | 10 | 22 | 15 | 22 | 63 |

*) Weizenstärke

**Ansprüche**

1. Verfahren zur Herstellung von stark quellbaren, feinteiligen Propfpolymeren aus einer Dispersion eines aliphatischen Kohlenwasserstoffs mit den Ausgangskomponenten
(a) 1 bis 30 Gew.-% Polysaccharid,
(b) 99 bis 70 Gew.-% (Meth)Acrylsäure, die zu 50 bis 100 % neutralisiert ist, in wäßriger Lösung und
(c) 0 bis 25 Gew.-% weitere Carboxylgruppen enthaltende Vinylmonomere
in Gegenwart
(1) eines nichtionischen, in aliphatischen Kohlenwasserstoffen mindestens teilweise löslichen Tensids mit

7

einem Hydrophil-Lipophil-Gleichgewicht kleiner als 10 und
(2) eines nichtionischen, wasserlöslichen Tensids mit einem Hydrophil-Lipophil-Gleichgewicht größer als 10 durch einstufige, diskontinuierlich, inverse Suspensionspolymerisation,
dadurch gekennzeichnet,
daß man nach der Polymerisation
- eine Teilentwässerung durch azeotrope Destillation bis zu einem Wassergehalt von 10 bis 30 Gew.-%, bezogen auf die wäßrige Polymerphase, vornimmt,
- 0.005 bis 5 Gew.-% Quervernetzungsmittel, bezogen auf die Komponenten (a), (b) und (c), zusetzt und eine Vernetzung durchführt und dann
- das Polymer als feinteiliges Produkt abtrennt.

2. Verfahren nach Anspruch 1,
dadurch gekennzeichnet,
daß man die Teilentwässerung bis zu einem Wassergehalt von 20 bis 30 Gew.-% vornimmt.

3. Verfahren nach Anspruch 1,
dadurch gekennzeichnet,
daß man 0,05 bis 0,5 Gew.-% Quervernetzungsmittel zusetzt und die Vernetzung bei 50 bis 100 °C durchführt.

4. Verfahren nach Anspruch 3,
dadurch gekennzeichnet,
daß man ein Epoxid einsetzt und die Vernetzung bei 60 bis 80 °C durchführt.

5. Verfahren nach Anspruch 1,
dadurch gekennzeichnet,
daß für das Pfropfpolymer 3 bis 10 Gew.-% Stärke als Polysaccharid-Ausgangskomponente eingesetzt wird.

6. Verfahren nach Anspruch 1,
dadurch gekennzeichnet,
daß man die inverse Suspensionspolymerisation in Gegenwart von 0,005 bis 1 Gew.-% Quervernetzungsmittel, bezogen auf die Komponenten (a), (b) und (c), durchführt.